# EUROPÄISCHE PATENTANMELDUNG

(11) **EP 1 286 197 A1**
(43) Veröffentlichungstag der Anmeldung: **26.02.2003**
(21) Anmeldenummer: 02017499.1
(22) Anmeldetag: 06.08.2002
(51) Int. Cl.: G02B 25/00, G02B 23/16

(54) **Anordnung zum drehbaren Verstellen einer Kappe auf einem Okulargehäuse**

(30) Priorität: 16.08.2001 DE 10139173
(71) Anmelder: Leica Camera AG, 35606 Solms (DE)
(72) Erfinder: Hengst, Alfred, 35633 Lahnau (DE); Syré, Philipp, 35440 Linden (DE)
(74) Vertreter: Stamer, Harald, Dipl.-Phys.

(57) **Zusammenfassung**

Eine Anordnung zum drehbaren Verstellen einer Kappe auf einem Okulargehäuse mit einem aus dem Okulargehäuse radial nach außen weisenden feststehenden Zapfen und einer dem Zapfen zugeordneten, auf der Innenseite der Kappe angeordneten und in axialer Richtung ansteigenden Nut, zeichnet sich dadurch aus, daß in einer Ebene senkrecht zur Längsachse (4) des Okulargehäuses (10) an diesem drei Zapfen (11) angeordnet sind, deren Köpfe zumindest angenähert denselben Abstand zur Längsachse (4) aufweisen und daß der Gleitboden (7) der jedem Zapfen (11) zugeordneten Nut (3) einen demgegenüber geringeren Abstand aufweist, so daß die Kappe (1) unter Vorspannung an den Zapfen (11) anliegt.

## Beschreibung

Die Erfindung betrifft eine Anordnung zum drehbaren Verstellen einer Kappe auf einem Okulargehäuse mit einem aus dem Okulargehäuse radial nach außen weisenden feststehenden Zapfen und einer dem Zapfen zugeordneten, auf der Innenseite der Kappe angeordneten und in axialer Richtung ansteigenden Nut.

Eine Anordnung dieser Art ist aus US 5 784 207 A bekannt. Auf einem Okulargehäuse ist eine sogen. Augenmuschel längsverschieblich angeordnet, um für Brillenträger und normalsichtige Beobachter eine optimale Lage des Auges zur Austrittspupille des Okulars einstellen zu können. Am Okulargehäuse ist eine Schraube befestigt, deren Kopf in einer Nut geführt wird, die in die Innenwand der Augenmuschel eingearbeitet ist. Durch Drehen der Augenmuschel wird die Höhe der Augenmuschel relativ zum Okulargehäuse verstellt. Der Nut-Führung im Querschnitt der Anordnung gegenüberliegend ist zwischen der Augenmuschel und dem Okulargehäuse eine Rastung für verschiedene Auszugsstellungen der Augenmuschel vorgesehen. Die Rastung besteht aus einem mit einer Nase versehenen Blattfederelement, das auf dem Okulargehäuse angeordnet ist, wobei die Nase in geeignet geformte Kerben in der Innenwand der Augenmuschel einrastet.

Die Vielzahl der Teile erschwert die Montage und ist teuer. Die Spannkraft des Rastelementes nutzt sich durch Materialermüdung ab.

Eine Demontage der Augenmuschel für Reinigungszwecke ist nicht vorgesehen.

Aus der DE 299 04 366 U1 ist ein Okulargehäuse mit einer verstellbaren, insbesondere asymmetrisch geformten Augenmuschel bekannt. Die ebenfalls aus einer Nut und einem Zapfen bestehende Führung soll gewährleisten, daß die Augenmuschel in den jeweiligen Endstellungen der Verschiebung arretiert ist und immer dieselbe Orientierung in Umfangsrichtung aufweist. Dazu sind Raststellungen vorgesehen, die auf einer Linie parallel zur Längsachse des Okulargehäuses angeordnet sind. Da die Führungsnut gegenüber der Längsachse geneigt ist, muß ihre Richtung für den Übergang in die Raststellung immer zu der vorgesehenen Linie parallel zur Längsachse umgelenkt werden. Die Rastung wird durch eine kantige Richtungsänderung der Führungsnut erzeugt.

Diese Führung kommt zwar ohne zusätzliche bewegliche Teile aus, sie erfordert jedoch eine verhältnismäßig komplexe Form der Führungsbahnen, die sich an den kantigen Umlenkungen zur Raststellung bei längerem Gebrauch abnutzen können. Eine Demontage der Augenmuschel ist auch hier nicht vorgesehen.

Der Erfindung lag daher die Aufgabe zugrunde, für eine auf einem Okulargehäuse drehbar zu verstellende Augenmuschel eine einfache und kostengünstige Befestigung, Führung und Rastung anzugeben, die mit nur einem bewegten mechanischen Bauteil auskommt, welches gegenüber Umwelteinflüssen unempfindlich ist und zur Reinigung schnell und ohne Hilfswerkzeuge vom Okulargehäuse abgenommen, gereinigt und wieder aufgesetzt werden kann.

Diese Aufgabe wird bei einer Anordnung der eingangs genannten Art erfindungsgemäß durch die kennzeichnenden Merkmale des Anspruchs 1 gelöst. Vorteilhafte Ausgestaltungen ergeben sich aus den Merkmalen der Unteransprüche 2 bis 11.

In der Zeichnung ist ein Ausführungsbeispiel schematisch dargestellt und wird nachfolgend anhand der Figuren näher beschrieben. Im einzelnen zeigen:
Fig.1 einen Längsschnitt durch die Kappe,
Fig.2 einen Längsschnitt durch das Okulargehäuse und
Fig.3 einen Querschnitt der Anordnung im montierten Zustand.

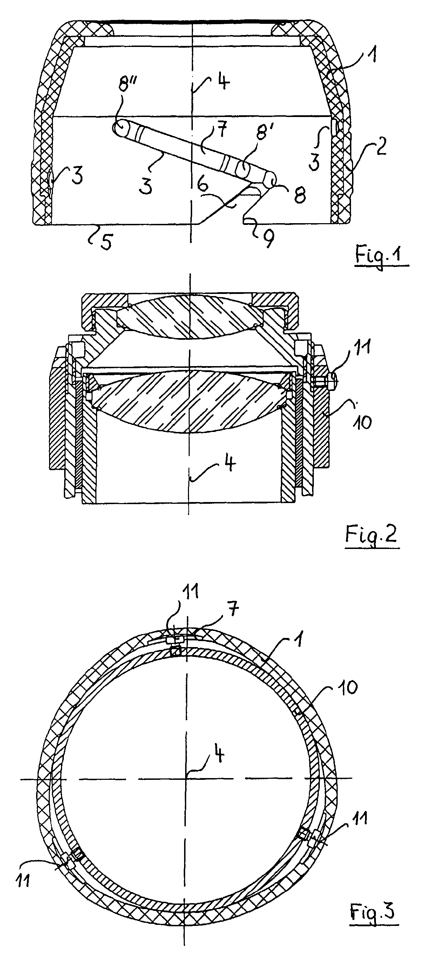

Fig.1 zeigt eine Kappe 1, auf die z.B. ein gummielastischer Überzug 2 aufgestülpt ist. Der Überzug 2 kann zur Reinigung aufgrund seiner Elastizität leicht von der Kappe 1 abgenommen und wieder aufgestülpt werden. Er dient insbesondere der weichen Anlage an ein Brillenglas oder an die Augenhöhle des Betrachters.

Die Kappe 1 enthält in ihrer zylindrischen Innenwand symmetrisch versetzt drei Nuten 3, die gegenüber der Längsachse 4 der Anordnung geneigt sind. Das dem unteren Rand 5 der Kappe 1 nächst gelegene Ende 6 der Nut 3 ist gegenläufig zur Neigung der Nut 3 abgewinkelt und zum Rand 5 hin offen. In den Gleitboden 7 der Nut 3 sind lokale Vertiefungen 8, 8', 8" eingefügt, die der Rastung dienen. Die Rastvertiefung 8 befindet sich in der Ecke der Abwinklung der Nut 3. Diese Raststellung entspricht der am weitesten angehobenen Kappenstellung.

Durch Abfräsen der unter einem spitzen Winkel zum unteren Rand 5 der Kappe 1 auslaufenden Begrenzung 9 der Nut 3 parallel zur Längsachse 4 wird eine vergrößerte Öffnung der Nut 3 am unteren Rand 5 der Kappe 1 geschaffen.

In Fig.2 ist ein Okulargehäuse 10 dargestellt, an dem radial nach außen weisende Zapfen 11 befestigt sind. Zur Montage wird die Kappe 1 auf das Okulargehäuse 10 aufgesetzt und möglicherweise leicht verdreht, wobei die Zapfen 11 in die vergrößerten Öffnungen der Nuten 3 gleiten. Da der Durchmesser der Kappe 1 im Bereich des Gleitbodens 7 der Nuten 3 kleiner als der entsprechende Durchmesser des die Köpfe der Zapfen 11 enthaltenden Umkreises ist, muß die Kappe 1 unter leichtem Druck auf die Zapfen 11 geschoben werden. Das Untermaß des Gleitbodens 7 gegenüber dem Kopf des jeweiligen Zapfens 11 beträgt vorzugsweise 1,0 % bis 2,0 % und das entsprechende Untermaß der Rastvertiefungen 8, 8', 8" vorzugsweise 0,01 % bis 0,9 % des Abstandes des Kopfes zur Längsachse 4.

Wie aus Fig.3 ersichtlich ist, deformiert sich die Kappe1 beim Aufschieben auf die Gleitbahnen 7 der Nuten 3 im Querschnitt zu einem Kreisdreieck. Die Darstellung in Fig.3 ist dabei zur besseren Anschauung übertrieben stark dargestellt. Die Köpfe der Zapfen 11 gleiten daher unter einer von der Kappe 1 durch Deformation erzeugten Vorspannung auf dem Gleitboden 7 der Nuten 3.

Durch weiteres Drehen gegen den Uhrzeigersinn wird die Kappe 1 in die erste Raststellung 8 gebracht. Dabei wird die Vorspannung zwar etwas entlastet, sie sorgt aber wegen des bestehenden Untermaßes weiterhin für eine spielfreie Rastung der Kappe 1. In der ersten Raststellung 8 ist eine weitere Drehung gegen den Uhrzeigersinn nicht möglich.

Bei einer Drehung im Uhrzeigersinn wird die Kappe 1 zunächst gegen den Rastwiderstand aus der Rastvertiefung 8 herausgebracht und schraubt sich dann immer weiter auf das Okulargehäuse 10 bis zur nächsten Rastvertiefung 8' und weiter zur letzten Rastvertiefung 8".

Zum Lösen der Kappe 1 von dem Okulargehäuse 10 braucht die Kappe 1 lediglich in die Rastvertiefung 8 gebracht zu werden. Dann genügt ein Zug an der Kappe1 mit anschließender Drehung im Uhrzeigersinn, um die Kappe 1 abheben zu können. Der Wechsel der Drehrichtung stellt daher eine Sicherung gegen unbeabsichtigtes Abheben der Kappe 1 dar.

Die Kappe 1 wird vorzugsweise aus einem abriebfesten, elastisch deformierbaren Kunststoff mit geringem thermischen Ausdehnungskoeffizienten gefertigt. Da die Köpfe der Zapfen 11 unter Vorspannung in den Nuten 3 gleiten und auch gegen die Vorspannung aus den Rastvertiefungen 8, 8', 8" herausgedrückt werden müssen, erhöht ein abriebfestes Material die Lebensdauer der Anordnung. Durch eine ballige, insbesondere ballig polierte Oberfläche der Köpfe der Zapfen 11 werden die Lebensdauer und der Gleitkomfort beim Verstellen der Kappe 1 gefördert. Da die Augenmuscheln insbesondere an Fernrohren häufig extremen Temperaturschwankungen ausgesetzt sind, ist es zur Erhaltung der durch Deformation erzeugten Vorspannung wichtig, daß diese durch Temperaturausdehnung nicht wesentlich verringert wird. Ein glasfaserverstärktes Polycarbonat hat sich als besonders geeignet bezüglich der beiden gewünschten Eigenschaften erwiesen.

## Patentansprüche

1. Anordnung zum drehbaren Verstellen einer Kappe auf einem Okulargehäuse mit einem aus dem Okulargehäuse radial nach außen weisenden feststehenden Zapfen und einer dem Zapfen zugeordneten, auf der Innenseite der Kappe angeordneten und in axialer Richtung ansteigenden Nut, **dadurch gekennzeichnet, daß** in einer Ebene senkrecht zur Längsachse (4) des Okulargehäuses (10) an diesem drei Zapfen (11) angeordnet sind, deren Köpfe zumindest angenähert denselben Abstand zur Längsachse (4) aufweisen und **daß** der Gleitboden (7) der jedem Zapfen (11) zugeordneten Nut (3) einen demgegenüber geringeren Abstand aufweist, so **daß** die Kappe (1) unter Vorspannung an den Zapfen (11) anliegt.

2. Anordnung nach Anspruch 1, **dadurch gekennzeichnet, daß** die Nuten (3) in ihrem Gleitboden (7) Rastvertiefungen (8, 8', 8") aufweisen, deren Form den Köpfen der Zapfen (11) angepaßt ist und deren Tiefe so gewählt ist, **daß** die Kappe (1) in den Raststellungen unter einer gegenüber der Stellung am Gleitboden (7) verringerten Vorspannung an den Zapfen (11) anliegt.

3. Anordnung nach Anspruch 1 und 2, **dadurch gekennzeichnet, daß** das Untermaß des Gleitbodens (7) gegenüber dem Kopf des Zapfens (11) 1,0 % bis 2,0 % und das entsprechende Untermaß der Rastvertiefungen (8, 8', 8") 0,01 % bis 0,9 % des Abstandes des Kopfes zur Längsachse (4) beträgt.

4. Anordnung nach Anspruch 1, **dadurch gekennzeichnet, daß** die Nuten (3) an ihrem dem unteren Rand (5) der Kappe (1) nächstgelegenen Teil (6) gegengerichtet zur axialen Steigung abgewinkelt und am unteren Rand (5) der Kappe (1) offen sind.

5. Anordnung nach Anspruch 4, **dadurch gekennzeichnet, daß** die unter einem spitzen Winkel zum unteren Rand (5) der Kappe (1) auslaufende Begrenzung (9) der Nuten (3) parallel zur Längsachse (4) abgefräst ist.

6. Anordnung nach einem der vorhergehenden Ansprüche, **dadurch gekennzeichnet, daß** die Nuten (3) in der Abwinklungsecke eine Rastvertiefung (8) aufweisen.

7. Anordnung nach einem der vorhergehenden Ansprüche, **dadurch gekennzeichnet, daß** die Köpfe der Zapfen (11) ballig geformt sind.

8. Anordnung nach Anspruch 7, **dadurch gekennzeichnet, daß** die Köpfe der Zapfen (11) ballig poliert sind.

9. Anordnung nach einem der vorhergehenden Ansprüche, **dadurch gekennzeichnet, daß** die Kappe (1) aus einem abriebfesten, elastisch deformierbaren Kunststoff mit geringem thermischem Ausdehnungskoeffizienten besteht.

10. Anordnung nach Anspruch 9, **dadurch gekennzeichnet, daß** die Kappe (1) aus einem glasfaserverstärkten Polycarbonat besteht.

11. Anordnung nach einem der vorhergehenden Ansprüche, **dadurch gekennzeichnet, daß** die Kappe (1) mit einem abnehmbaren Überzug (2) aus einem gummielastischen Material versehen ist.
